Europäisches Patentamt

European Patent Office

Office européen des brevets

(11) Veröffentlichungsnummer: **0 297 432 B1**

(12) # EUROPÄISCHE PATENTSCHRIFT

(45) Veröffentlichungstag der Patentschrift:
24.04.91 Patentblatt 91/17

(51) Int. Cl.⁵: **C10B 53/00, C10K 1/04**

(21) Anmeldenummer: 88110003.6

(22) Anmeldetag: 23.06.88

(54) Verfahren zum Betreiben einer Pyrolyseanlage.

(30) Priorität: 30.06.87 DE 3721451

(43) Veröffentlichungstag der Anmeldung:
04.01.89 Patentblatt 89/01

(45) Bekanntmachung des Hinweises auf die
Patenterteilung:
24.04.91 Patentblatt 91/17

(84) Benannte Vertragsstaaten:
AT BE CH DE GB IT LI NL SE

(56) Entgegenhaltungen:
EP-A- 0 167 702
GB-A- 1 562 492
US-A- 4 588 477

(73) Patentinhaber: BBC Brown Boveri
Aktiengesellschaft
Kallstadter Strasse 1
W-6800 Mannheim 31 (DE)

(72) Erfinder: Häuser, Ulrich, Dr.
Kettelerstrasse 11
W-6806 Viernheim (DE)
Erfinder: Steinstrasser, Frank, Dr.
Hölkeskampring 169
W-4690 Herne (DE)

(74) Vertreter: Rupprecht, Klaus, Dipl.-Ing. et al
c/o BBC Brown Boveri Aktiengesellschaft ZPT
Postfach 100351 Kallstadter Strasse 1
W-6800 Mannheim 1 (DE)

## Beschreibung

Die Erfindung betrifft ein Verfahren zum Betreiben einer Pyrolyseanlage, in der Abfallmaterial, insbesondere Kohlenwasserstoffe enthaltendes Abfallmaterial wie Gummi und/oder Kunststoffabfälle enthaltendes Abfallmaterial, thermisch zersetzt wird und das entstandene heiße Pyrolysegas in mindestens einer Vorkühlstufe und mindestens einer Nachkühlstufe gekühlt wird und wenigstens ein Teil des gekühlten Pyrolysegases in einem Gasspeicher gespeichert wird.

In bekannten Pyrolyseanlagen dieser Art strömt das aus dem Pyrolysereaktor kommende heiße und brennbare Pyrolysegas mit einer Temperatur von ungefähr 400 bis 1000°C, vorzugsweise 500 bis 700° C, zur Vorkühlstufe, in der es auf eine Vorkühltemperatur von ungefähr 120 bis 300° C, vorzugsweise 140 bis 200°C gekühlt wird. Anschließend wird das Pyrolysegas in mindestens einer Nachkühlstufe weitergekühlt. Dieses brennbare, gekühlte Pyrolysegas wird in erster Linie zur Deckung des Eigenbedarfs, insbesondere zur Beheizung des Pyrolysereaktors und/oder als Wirbelgas eingesetzt, falls der Pyrolysereaktor mit einem Wirbelbett oder einer Wirbelschicht arbeiten sollte. Das restliche Pyrolysegas wird einem Gasspeicher zugeführt und steht für andere Verwendungszwecke, z. B. für die Raumheizung, zur Verfügung.

Die Nachkühlstufe und die Nachkühlstufe nachgeschalteten weiteren Bauteile, wie z. B. Verdichter und Gasspeicher, sind aus Kostengründen nur für den Betrieb mit einer gegenüber dem Betrieb der Vorkühlstufe niedrigen Temperatur dimensioniert und geeignet. Es muß daher vermieden werden, daß bei einer Betriebsstörung der Vorkühlstufe, z. B. bei einem Versagen der Kühlmittelzufuhr, heißes Pyrolysegas in die Nachkühlstufe und die nachgeschalteten Bauteile eindringt. Dies könnte dadurch erreicht werden, daß die Anlage bei einer Betriebsstörung der Vorkühlstufe außer Betrieb genommen wird. Ein solches Vorgehen wäre jedoch sehr nachteilig, da das Abschalten und auch das Anfahren einer Pyrolyseanlage eine gewisse Zeit von ungefähr zwei bis fünf Stunden in Anspruch nimmt. Da in vielen Fällen die Betriebsstörungen der Vorkühlstufe in kurzer Zeit behoben werden können, ist das vorgenannte Abschalten der Pyrolyseanlage sehr unwirtschaftlich.

Der Erfindung liegt daher die Aufgabe zugrunde, ein Verfahren der eingangs genannten Art unter Überwindung der Nachteile des Standes der Technik derart weiterzubilden, daß im Falle von Betriebsstörungen der Vorkühlstufe die übrigen Anlagenteile weiter mit möglichst weitgehend normalen Funktionen in Betrieb bleiben können. Darüber hinaus soll dies mit geringem Aufwand und daher kostengünstig durchzuführen sein Schließlich soll das Verfahren für Anlagen mit verschiedenen Pyrolysereaktoren geeignet und mit hoher Sicherheit durchzuführen sein.

Die Lösung dieser Aufgabe besteht erfindungsgemäß darin, daß die Temperatur des Pyrolysegases vor dem Eintritt in die Nachkühlstufe (Vorkühltemperatur) gemessen wird, daß, falls die Vorkühltemperatur einen vorgegebenen Grenzwert überschreitet, das Pyrolysegas vor dem Erreichen der Nachkühlstufe aus der Anlage abgeleitet wird, und daß der Nachkühlstufe dem Gasspeicher entnommenes gespeichertes Pyrolysegas zugeführt wird.

Es wird also die Temperatur des Pyrolysegases vor seinem Eintritt in die Nachkühlstufe gemessen. Im Falle einer Betriebsstörung der Vorkühlstufe, die z. B. durch das Versagen der Kühlmittelzufuhr ausgelöst worden sein kann, steigt diese Temperatur, die als Vorkühltemperatur bezeichnet wird, an. Erreicht die Vorkühltemperatur einen vorgegebenen Grenzwert, so wird das der Nachkühlstufe zuströmende Pyrolysegas aus der Anlage abgeleitet und gleichzeitig dem Gasspeicher entnommenes abgekühltes Pyrolysegas der Nachkühlstufe zugeführt. Das Pyrolysegas des Gasspeichers weist ungefähr Umgebungstemperatur auf. Es können daher die Nachkühlstufe und jene Bauteile, die der Nachkühlstufe nachgeschaltet sind, mit gegenüber dem Normalbetrieb unverändertem Gasdurchsatz weiter betrieben werden. Ein zeitaufwendiges Abschalten und Wiederanfahren der Anlage ist hierdurch vermieden worden. Da das im Pyrolysereaktor erzeugte Pyrolysegas aus der Anlage abgeleitet wird, kann auch der Pyrolysereaktor ohne Betriebsunterbrechung und ohne Betriebseinschränkung weiterarbeiten. Ist jedoch zu erkennen, daß die Störung der Vorkühlstufe längere Zeit, insbesondere eine halbe Stunde oder mehr andauern wird, so ist es zweckmäßig, den Pyrolysereaktor abzuschalten. Hierdurch wird vermieden, daß über längere Zeit ungereinigtes Gas verbrannt werden muß. Die Belastung der Umwelt durch Schadstoffe ist hierdurch verringert. Ein weiterer wesentlicher Vorteil ist darin zu sehen, daß nach Behebung des Störfalles die eingeleiteten, vorgenannten Maßnahmen ohne Zeitaufwand aufgehoben werden können und die Pyrolyseanlage unverzüglich oder zumindest in kurzer Zeit mit normalem Betriebsablauf weiterarbeiten kann.

Besonders hervorzuheben ist noch, daß jene Anlagenteile, die von der Nachkühlstufe mit abgekühltem Pyrolysegas als Betriebsmittel versorgt werden, wie z. B. die den Pyrolysereaktor beheizenden Gasbrenner oder die ein Wirbelbett im Pyrolysereaktor erzeugenden Wirbeldüsen, durch das erfindungsgemäße Verfahren auch im Störfalle ohne besondere Maßnahmen mit Pyrolysegas, das dem Gasspeicher entnommen wurde, versorgt werden.

Da das aus der Anlage abgeleitete Pyrolysegas infolge seiner hohen Temperatur und/oder wegen der von ihm mitgeführten Schmutzteile einer Verwendung nicht zugeführt werden kann, empfiehlt es sich, daß das abgeleitete Pyrolysegas verbrannt wird. Vorzugsweise geschieht dies in einer Fackel.

Damit im Störfalle die Vorkühlstufe möglichst rasch abgekühlt wird, ist es zweckmäßig, daß das Pyrolysegas vor der Vorkühlstufe abgeleitet und das gespeicherte Pyrolysegas durch die Vorkühlstufe der Nachkühlstufe zugeführt wird.

In vielen Fällen ist es jedoch günstiger, daß das Pyrolysegas zwischen der Vorkühlstufe und der Nachkühlstufe abgeleitet wird und daß das gespeicherte Pyrolysegas der Nachkühlstufe direkt zugeführt wird. Dies hat den Vorteil, daß jene Anlagenteile, die für die Ableitung des heißen Pyrolysegases vorgesehen sind, im Normalbetrieb der Pyrolyseanlage nur mit bereits in der Vorkühlstufe gekühltem Pyrolysegas in Berührung kommen. Eine Langzeit-Beständigkeit gegenüber hohen Temperaturen ist für diese Anlagenteile daher nicht erforderlich.

Als Grenzwert der Vorkühltemperatur, bei der die vorgenannten Maßnahmen eingeleitet werden, wird zweckmäßig die höchstzulässige Betriebstemperatur der Nachkühlstufe benutzt.

Weitere Vorteile und Merkmale des erfindungsgemäßen Verfahrens gehen aus der folgenden Beschreibung von Pyrolyseanlagen hervor, die für die Durchführung des erfindungsgemäßen Verfahrens geeignet sind.

Hierbei zeigt :

Figur 1 Eine Pyrolyseanlage mit einem Pyrolysereaktor in Form einer liegenden Trommel und

Figur 2 eine Ausführungsvariante des Gegenstandes der Figur 1 mit einem stehenden Pyrolysereaktor, der mit einer Wirbelschicht arbeitet.

Gleiche Teile sind in dem einzelnen Figuren mit den gleichen Bezugszeichen versehen.

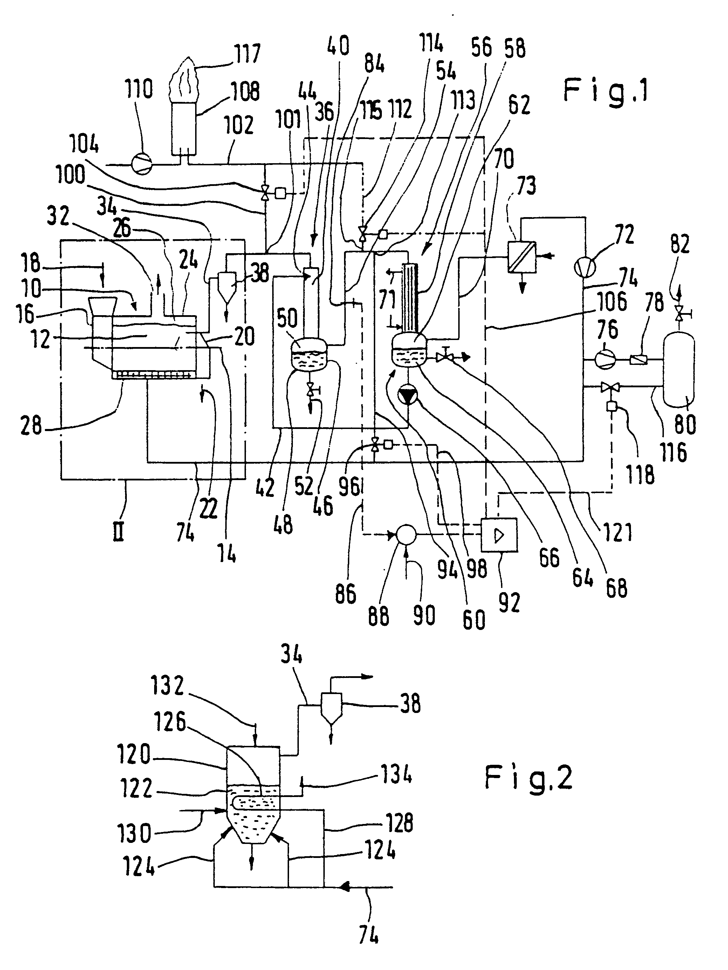

Die Pyrolyseanlage gemäß Figur 1 weist einen Pyrolysereaktor 10 auf, der mit einer liegenden Trommel 12 versehen ist. Diese Trommel kann durch einen nicht dargestellten Antrieb um ihre ungefähr horizontal verlaufende Längsachse 14 gedreht werden. An dem einen, in der Zeichnung linken Ende des Pyrolysereaktors ist ein Zufuhrtrichter 16 vorgesehen, der den Innenraum der Trommel 12 gegenüber dem Außenraum dicht abschließt und durch den in Richtung des Pfeiles 18 zugeführtes Abfallmaterial in die Trommel eingeleitet werden kann. Das andere, in der Zeichnung rechte Ende des Pyrolysereaktors ist mit einem Auslaßgehäuse 20 versehen, das den Innenraum der Trommel 12 ebenfalls gegenüber dem Außenraum gasdicht abschließt. Durch dieses Auslaßgehäuse 20 wird der Pyrolyserückstand in Richtung des Pfeiles 22 aus der Trommel abgeführt.

Die Trommel 12 ist mit einem Gehäuse 24 versehen, das die Trommel mit Abstand umgibt, so daß ein Zwischenraum 26 gebildet ist. Unterhalb der Trommel 12 ist im Zwischenraum 26 ein Gasbrenner 28 vorgesehen, der durch eine Pyrolysegasleitung 74 mit Brennstoff versorgt wird. An den oberen Bereich des Zwischenraums 26 ist ein Abgaskanal 32 angeschlossen, der in den Außenraum mündet.

Vom Innenraum der Pyrolysetrommel 12 führt eine Heißgasleitung 34 zur Vorkühlstufe 36, wobei in die Heißgasleitung ein Zyklonabscheider 38 eingefügt ist.

Die Vorkühlstufe 36 ist für direkte Kühlung des Pyrolysegases vorgesehen. Sie weist demnach einen vertikal verlaufenden Wärmetauschkanal 40 auf, an dessen oberes Ende die Heißgasleitung 34 angeschlossen ist. Ebenfalls am oberen Ende des Wärmetauschkanals 40 ist die Kühlmittelleitung 42 angeschlossen. Die Kühlmittelleitung ist hierbei mit einer Düse 44 versehen, mit deren Hilfe das Kühlmittel horizontal in den Wärmetauschkanal eingesprüht wird. Das untere Ende des Wärmetauschkanals mündet in einen ersten Abscheidebehälter 46, dessen unterer Bereich als Ölraum 48 und dessen oberer Bereich als Gasraum 50 dient. Der Ölraum 48 ist noch mit einer absperrbaren Leitung 52 versehen.

Vom Gasraum 50 des ersten Abscheidebehälters führt eine Verbindungsleitung 54 zur Nachkühlstufe 56. Die Nachkühlstufe 56 arbeitet mit indirekter Kühlung und weist einen Vertikalrohrwärmetauscher 58 auf, wobei an das obere Ende der vertikalen Wärmetauschrohre die Verbindungsleitung 54 angeschlossen ist. Die unteren Enden der Wärmetauschrohre münden in einen Gasraum 62, der in einem zweiten Abscheidebehälter 60 oberhalb eines Leichtölraumes 64 ausgebildet ist. An den Leichtölraum 64 ist eine mit einem Absperrventil versehende Leitung 68 sowie unter Zwischenschaltung einer Pumpe 66 die Kühlmittelleitung 42 angeschlossen. Der Vertikalrohrwärmetauscher 58 ist noch mit Leitungen 71 versehen, durch die Kühlwasser zu- bzw. abgeführt wird.

Der Gasraum 62 des zweiten Abscheidebehälters 60 ist durch eine Leitung 70 mit der Saugseite eines Gasförderers 72 verbunden, der vorzugsweise als Verdichter ausgebildet ist. In die Leitung 70 ist zweckmäßig ein weiterer Kühler 73 eingeschaltet, in dem das Pyrolysegas in indirektem Wärmetausch weiter abgekühlt wird. Als Kühlmittel dient vorzugsweise Kühlwasser. Der Kühler 73 ist in der Zeichnung nur schematisch angedeutet. In der Praxis ist es zweckmäßig, den Kühler 73 genauso aufzubauen wie die Nachkühlstufe 56. In diesem Falle wird das beim Kühlen anfallende Kondensat, das aus Öl besteht, in einen Abscheidebehälter abgeschieden.

Der Ausgang des Gasförderers 72 ist an eine Pyrolysegasleitung 74 angeschlossen. Mit dieser Pyrolysegasleitung 74 ist der Gasbrenner 28 des Pyrolysereaktors 10 zur Brenngasversorgung verbunden. Außerdem ist an die Pyrolysegasleitung 74 ein Verdichter 76 angeschlossen, dessen Ausgang über einen Rückflußverhinderer 78, zweckmäßig in Form einer Rückschlagklappe, mit einem Gasspeicher 80 verbunden ist. Dieser Gasspeicher 80 hat vorzugsweise die Form eines zylindrischen Behälters.

Um Pyrolysegas dem Gasspeicher 80, insbesondere für Raumheizung entnehmen zu können, ist eine Leitung 82 mit eingefügtem Absperrorgan vorgesehen.

In der Verbindungsleitung 54 zwischen der Vorkühlstufe 36 und der Nachkühlstufe 56 ist ein Temperaturfühler 84, zweckmäßig in Form eines Thermoelements, angeordnet, der die Temperatur des Pyrolysegases erfaßt. Die Signalleitung 86 des Temperaturfühlers 84 führt zu einer Temperaturvergleichstelle 88, die mit einem Einsteller 90 für den Temperaturgrenzwert versehen ist. Der Ausgang der Temperaturvergleichstelle 88 führt zu einem Regelgerät 92.

An die Pyrolysegasleitung 74 ist eine Speiseleitung 94 angeschlossen, die zu der Verbindungsleitung 54 führt, die die Vorkühlstufe 36 mit der Nachkühlstufe 56 verbindet. In die Speiseleitung 94 ist ein fernbetätigtes Absperrorgan 96, zweckmäßig in Form eines Motorventils oder eines Magnetventils eingefügt, das über die elektrische Leitung 98 mit dem Regelgerät 92 zur Steuerung verbunden ist.

Die Heißgasleitung 34 ist stromabwärts des Zyklonabscheiders 38 durch eine Leitung 100 mit einer Gasleitung 102 verbunden. In die Leitung 100 ist ein zweites Absperrorgan 104, zweckmäßig in Form eines elektrischen Motorventils oder eines Magnetventils, eingefügt. Zur Betätigung des zweiten Absperrorgans 104 ist dieses durch eine elektrische Leitung 106 mit dem Regelgerät 92 verbunden. Die Gasleitung 102 führt zu einem Gasbrenner 108, der im Freien angeordnet ist und der zweckmäßig als Gasfackel ausgebildet ist. Die für die Gasverbrennung im Gasbrenner 108 benötigte Verbrennungsluft wird mit Hilfe des Gebläses 110 vom Außenraum her zugeführt.

Gemäß einer Ausführungsvariante ist die Leitung 100 samt zweitem Absperrorgan 104 weggelassen und statt dessen die Gasleitung 102 mit Hilfe der Leitung 112 an die Verbindungsleitung 54 angeschlossen. Hierbei ist in die Leitung 112 ein fernbetätigtes drittes Absperrorgan 114, zweckmäßig in Form eines elektrischen Motorventils oder Magnetventils, eingefügt. Zur Steuerung des dritten Absperrorgans ist dieses durch die elektrische Leitung 106 mit dem Regelgerät 92 verbunden. Wie bereits dargelegt, ist entweder die Leitung 100 mit eingefügtem zweiten Absperrorgan 104 oder die Rohrleitung 112 mit eingefügtem dritten Absperrorgan 114 vorgesehen und an die Gasleitung 102 angeschlossen. In beiden Fällen sind die Absperrorgane 104 oder 114 durch die elektrische Leitung 106 mit dem Regelgerät 92 verbunden. Die Ausführungsvariante ist strichpunktiert in Figur 1 eingezeichnet.

Der Gasspeicher 80 ist durch eine Rohrleitung 116 mit der Pyrolysegasleitung 74 verbunden, wobei in die Rohrleitung 116 ein viertes fernbetätigtes Absperrorgan 118, zweckmäßig in Form eines elektrischen Motorventils oder eines Magnetventils, eingefügt ist. Zur Steuerung des vierten Absperrorgans 118 ist eine elektrische Leitung 121 vorgesehen, die zum Regelgerät 92 führt.

Vor dem Betrieb der Anlage wird am Einsteller 90 der Grenzwert jener Temperatur eingestellt, mit welchem das Pyrolysegas höchstens der Nachkühlstufe zugeführt werden darf. Die Temperatur, mit welcher das Pyrolysegas in der Verbindungsleitung 54 strömt, wird als Vorkühltemperatur bezeichnet. Ist die vom Temperaturfühler 84 ermittelte Vorkühltemperatur geringer als jener Grenzwert, der eingestellt ist, so schließt das Regelgerät die Absperrorgane 96, 104 bzw. 114, und 118. Dieser Zustand liegt im Normalbetrieb der Anlage vor. Der Grenzwert der Vorkühltemperatur liegt vorzugsweise zwischen 150 und 300° Celsius, vorzugsweise zwischen 140 und 200° Celsius.

Steigt die Temperatur des Pyrolysegases in der Verbindungsleitung 54 über den vorgesehenen und am Einsteller 90 eingestellten Grenzwert der Vorkühltemperatur an, im vorliegenden Fall z. B. 150°C, so werden vom Regelgerät 92 das Absperrorgan 96, das zweite Absperrorgan 104 bzw. das dritte Absperrorgan 114 sowie das vierte Absperrorgan 118 geöffnet. Dieser Betriebszustand wird vom Regelgerät 92 nicht selbsttätig rückgängig gemacht, falls die Temperatur des Pyrolysegases in der Verbindungsleitung 94 unter den eingestellten Grenzwert absinken sollte. Um den Normalbetrieb der Anlage wieder zu erreichen, muß das Regelgerät 92 durch zusätzliche Maßnahmen, insbesondere durch Handbetätigung, wieder auf Normalbetrieb umgestellt werden.

Der Gesamtbetrieb der Anlage verläuft nun wie folgt. In den Zufuhrtrichter 16 des Pyrolysereaktors 10 wird in Richtung des Pfeiles 18 zerkleinertes Abfallmaterial, vorzugsweise Gummi- oder Kunststoffabfälle eingegeben, von wo es in die Pyrolysetrommel 12 übertritt. Die Pyrolysetrommel dreht sich um ihre Längsachse 14 mit ungefähr 3 bis 7 U/min.. Gleichzeitig wird die Pyrolysetrommel durch den Gasbrenner 28 beheizt, der von der Pyrolysegasleitung 74 mit Pyrolysegas als Brennstoff versorgt wird. Die heißen Rauchgase strömen unter Beheizung der Trommel 12 im Zwischenraum 26 nach oben und werden durch den Abgaskanal 32 nach außen geführt. Da die Längsachse 14 der Trommel 12 zum Auslaßgehäuse 20 hin ein Gefälle von ungefähr 5 bis 10° aufweist, wandert das Abfallmaterial in der Trommel zum Auslaßgehäuse 20 hin, so daß dort die Pyrolyserückstände austreten und in Richtung des Pfeiles 22 abgeführt werden.

Vom Innenraum der Trommel 12 wird das heiße Pyrolysegas, das eine Temperatur von 400 bis 1000°C aufweist, durch die Heißgasleitung 34 entnommen und durch den Zyklonabscheider, der Staubteile abscheidet, der Vorkühlstufe 36 zugeführt. Hier tritt das heiße Pyrolysegas in den Wärmetauschkanal 40 ein und strömt nach unten zum ersten Abscheidebehälter 46. Zur Kühlung des heißen Pyrolysegases wird dem zweiten Abscheidebehälter 60 leichtsiedendes Pyrolyseöl entnommen und durch die Pumpe 66 dem Wärmetauschkanal 40 zugeführt. Die Kühlung wird dadurch bewirkt, daß das leichtsiedende Pyrolyseöl durch die Düse 44 in den Wärmetauschkanal 40 eingesprüht wird. Hier strömt das Gemisch aus feinzerstäubtem Pyrolyseöl und heißem Pyrolysegas nach unten zum ersten Abscheidebehälter 46, wobei sich das heiße Pyrolysegas abkühlt. Hierbei kondensiert ein hochsiedendes Pyrolyseöl, das sich im Ölraum 48 des ersten Abscheidebehälters sammelt, von wo es durch die Leitung 52 entnommen werden kann. Über dem Ölraum 48 sammelt sich das vorgekühlte Pyrolysegas im Gasraum 50. Die Temperatur des vorgekühlten Pyrolysegases wird als Vorkühltemperatur bezeichnet. Sie soll im vorliegenden Ausführungsbeispiel 150°C betragen. Üblicherweise liegt sie in einem Bereich zwischen 130 und 230° C.

Das Pyrolysegas strömt mit Vorkühltemperatur durch die Verbindungsleitung 54 zur Nachkühlstufe 56. Hierbei wird die Temperatur des Pyrolysegases durch den Temperaturfühler 84 erfaßt. Das in die Nachkühlstufe mit Vorkühltemperatur eintretende Pyrolysegas strömt unter Abkühlung in den vertikalen Wärmetauschrohren des Vertikalrohrwärmetauschers 58 nach unten zum zweiten Abscheidebehälter 60. Die Kühlung wird hierbei durch Kühlwasser bewirkt, das durch die Leitungen 71 zu- bzw. abgeführt wird. Während der Abkühlung des Pyrolysegases entsteht in der Nachkühlstufe leichtsiedendes Pyrolyseöl, das sich im Leichtölraum 64 des zweiten Abscheidebehälters 60 sammelt. Außer der Kühlmittelleitung 42 ist an den Leichtölraum 64 noch eine Leitung 68 mit eingefügtem Absperrventil angeschlossen, durch welche das leichtsiedende Pyrolyseöl entnommen werden kann.

Das Pyrolysegas wird durch die Leitung 70 dem Gasraum 62 des zweiten Abscheidebehälters entnommen und durch den Kühler 73 einem Gasförderer 72 zugeführt, der als Verdichter oder Gebläse ausgebildet ist. Der Gasförderer 72 drückt das Pyrolysegas in die Pyrolysegasleitung 74. Aus dieser Pyrolysegasleitung 74 wird der Gasbrenner 28 des Pyrolysereaktors 12 mit Brenngas versorgt. Das Pyrolysegas weist im Gasraum 62 eine Temperatur von 30 bis 60°C auf. Nach dem Kühler 73 beträgt die Temperatur des Pyrolysegases ungefähr 10 bis 20°C. und es ist jetzt frei von kondensierbaren Bestandteilen.

Jenes Pyrolysegas, das für die Versorgung des Gasbrenners 28 nicht erforderlich ist, wird durch den Verdichter 76 und den Rückflußverhinderer 78 in den Gasspeicher 80 gefördert. Der Druck im Gasspeicher 80 beträgt ungefähr 4 bis 10 bar. An den Gasbehälter 80 ist eine mit einem Absperrorgan versehene Leitung 82 angeschlossen, durch die Pyrolysegas entnommen und weiterverwendet werden kann, z. B. für den Betrieb von Heizungsanlagen oder Motoren.

Zu bemerken ist noch, daß das gekühlte Pyrolysegas vor seinem Eintritt in den Gasförderer 72 zweckmäßig noch durch Gaswaschapparate und-/oder Gasfilterapparate geführt wird, die in den Zeichnungen nicht dargestellt sind.

Die Nachkühlstufe und die der Nachkühlstufe nachgeschalteten weiteren Apparate wie z. B. der Kühler 73, der Gasförderer 72 und der Gasverdichter 76 sind aufgrund ihrer Bauweise nicht geeignet für die Beaufschlagung mit heißem Pyrolysegas, sowie es der Vorkühlstufe 36 zuströmt.

Tritt nun eine Störung der Vorkühlstufe 36 auf, wie sie durch das Versagen der Kühlmittelversorgung ausgelöst worden sein kann, so wird die Vorkühlstufe wirkungslos und das heiße Pyrolysegas strömt ungekühlt in die Verbindungsleitung 54 ein. Der am Einsteller 90 eingestellte Grenzwert der Vorkühltemperatur, im vorliegenden Fall 150°C, wird überschritten und vom Temperaturfühler 84 erfaßt. In diesem Fall wird das Überschreiten der Vorkühltemperatur von der Vergleichstelle 88 zum Regelgerät 92 weitergemeldet. Das Regelgerät 92 veranlaßt nun die Öffnung des Absperrorgans 96, des zweiten Absperrorgans 104 sowie des vierten Absperrorgans 118.

Jetzt wird das heiße Pyrolysegas nach dem Durchströmen des Zyklonabscheiders 38 der Heißgasleitung 34 entnommen und durch die Leitung 100, das geöffnete zweite Absperrorgan 104 und die Gasleitung 102 dem Gasbrenner 108 zugeführt. Hier wird das heiße Pyrolysegas mit Hilfe von Luft, die durch das Gebläse 110 zugeführt wird, verbrannt. Da der Gasbrenner 108 zweckmäßig die Form einer Fackel aufweist, die sich im Freien befindet, sind keine weiteren Maßnahmen für die Abfuhr der von der Flamme 117 gebildeten Verbrennungsprodukte erforderlich. Die Zündung der Flamme erfolgt durch geeignete Mittel, z. B. durch einen elektrischen Zündfunken.

Durch das geöffnete vierte Absperrorgan 118 wird gleichzeitig dem Gasspeicher 80 gespeichertes abgekühltes Pyrolysegas entnommen und in die Pyrolysegasleitung 74 eingeleitet. Dieses gespeicherte Pyrolysegas wird jetzt für den Betrieb des Gasbrenners 28 benutzt. Gleichzeitig wird durch das geöffnete Absperrorgan 96 gespeichertes Pyrolysegas der Pyrolysegasleitung 74 entnommen und durch die Speiseleitung 94 dem Nachkühler 56 zugeführt. Die Einspeisung des gespeicherten Pyrolysegases erfolgt hierbei in die Verbindungsleitung 54.

Bei der jetzigen Betriebsweise bleibt der Pyrolysereaktor unverändert in Betrieb, und das erzeugte heiße Pyrolysegas strömt ohne die Kühlstufen zu berühren zum Gasbrenner 108 und wird dort verbrannt. Gleichzeitig bleiben auch die Nachkühlstufe 56, der Kühler 73 sowie der Gasförderer 72 und ggf. weitere Apparate unverändert in Betrieb. Die für diesen Betrieb erforderliche Gasströmung wird mit Hilfe des gespeicherten Pyrolysegases erzeugt, das durch die Pyrolysegasleitung 74 der Nachkühlstufe 56 zugeführt wird. Die Gesamtanlage ist jetzt in zwei getrennt arbeitende Anlagenteile aufgeteilt, von denen der erste Anlagenteil vom heißen Pyrolysegas beaufschlagt wird, wogegen der zweite Anlagenteil nur vom bereits gekühltem, gespeicherten Pyrolysegas durchströmt wird. Dieser Anlageteil ist daher vor Überhitzung geschützt.

Steht wieder Kühlmittel für die Vorkühlstufe zur Verfügung, so daß die Anlage normal betrieben werden kann, so wird das Regelgerät 92 vorzugsweise durch Handbetätigung derart beeinflußt, daß die Absperrorgane 96, 104, 118 schließen und das Pyrolysegas wieder den weiter oben beschriebenen normalen Weg nimmt. Die Handbetätigung vermeidet, daß bei einem Störfall die Vorkühlstufe 36 ungewollt in Betrieb geht, falls die Vorkühltemperatur unter den Grenzwert absinken sollte.

Die Ableitung des heißen Pyrolysegases aus der Heißgasleitung 34 mit Hilfe der Leitung 100 wird man dann wählen, wenn das zweite Absperrorgan 104 so weit von der Heißgasleitung 34 entfernt angeordnet werden kann, daß es während des Normalbetriebes von den dort strömmenden heißen Pyrolysegasen nicht erhitzt wird. Es wird dann nur in dem vorbeschriebenen Störfall vom heißen Pyrolysegas beaufschlagt und erhitzt. Da dieser Störfall im Verhältnis zu Gesamtbetriebsdauer der Pyrolyseanlage meist nur kurzzeitig ist, wird das zweite Absperrorgan 104 jedenfalls nur kurzzeitig mit hohen Temperaturen belasten, wodurch seine Lebensdauer erheblich gesteigert ist.

An der Stelle 101 der Heißgasleitung 34 ist die Leitung 100 angeschlossen. Der Abstand zwischen der Stelle 101 und dem zweiten Absperrorgan 104 beträgt mindestens das 5-fache des Außendurchmessers der Leitung 100. Besser ist ein Abstand der mindestens das 15-fache des Außendurchmessers der Leitung 100 beträgt.

Muß aus baulichen Gründen das für die Ableitung des Pyrolysegases vorgesehene Absperrorgan in der Nähe jener Leitung, die das Pyrolysegas führt, vorgesehen sein, so ist zweckmäßig eine Anordnung zu wählen, wie sie mit strichpunktierten Linien in Figur 1 eingezeichnet ist. Gemäß dieser Anordnung entfällt die Leitung 100 sowie das zweite Absperrorgan 104 und der zum zweiten Absperrorgan 104 führende Teil der elektrischen Leitung 106, statt dessen ist die Gasleitung 102 durch die Leitung 112 mit eingefügtem dritten Absperrorgan 114 mit der Verbindungsleitung 54 verbunden, wobei das dritte Absperrorgan 114 an die elektrische Leitung 106 angeschlossen ist. Der Abstand zwischen der Anschlußstelle 115 und dem dritten Absperrorgan 114 ist hier kleiner als das 15-fache des Außendurchmessers der Leitung 112. Vorzugsweise ist der Abstand kleiner als das 5-fache des Außendurchmessers der Leitung 112. In dieser Verbindungsleitung 54 strömt im Normalbetrieb der Anlage ein Pyrolysegas, das die Vorkühltemperatur aufweist, im vorliegenden Fall 150° C. Dieses vorgekühlte Pyrolysegas ist somit wesentlich kälter als das den Pyrolysereaktor verlassende heiße Pyrolysegas, das eine Temperatur zwischen 400 und 1000°C aufweist. Das dritte Absperrorgan 114 kann daher in unmittelbarer Nähe der Verbindungsleitung 54 angeordnet oder sogar unmittelbar an die Verbindungsleitung angeschlossen sein. Die Temperatur des dritten Absperrorgans 114 kann im Normalbetrieb der Anlage lediglich eine Temperatur erreichen, die der Vorkühltemperatur des Pyrolysegases gleich ist. Höhere Temperaturbelastung findet nur während eines Störfalles statt, der im Verhältnis zur normalen Betriebsdauer verhältnismäßig kurz ist.

Der Normalbetrieb verläuft genauso wie weiter oben beschrieben wurde, im Störfall der Vorkühlstufe 36 steigt die Vorkühltemperatur in der Verbindungsleitung 54 an, so daß, ausgelöst durch den Temperaturfühler 84, das Regelgerät 92 das erste Absperrorgan 96, das dritte Absperrorgan 114 und das vierte Absperrorgan 118 öffnet. Jetzt wird, wie weiter oben beschrieben, die Anlage weiterbetrieben, ohne daß die Nachkühlstufe und ihr nachgeschaltete Apparate mit unzulässig hohen Temperaturen belastet werden. Zu bemerken ist hier noch, daß im Störfalle das heiße Pyrolysegas vor seiner Ableitung aus der Anlage noch die Vorkühlstufe 36 durchströmt. Von Bedeutung ist hierbei, daß die Speiseleitung 94 stromab der Abschlußstelle 115 der Leitung 112 an die Verbindungleitung 54 angeschlossen ist. Der Abstand beträgt ungefähr das 5 bis 15-fache, vorzugsweise das 7 bis 12-fache des Außendurchmessers der Verbindungsleitung 54. Hierdurch wird ein Zuströmen von heißem Pyrolysegas zur Nachkühlstufe 56 vermieden. Da das gespeicherte Pyrolysegas einen wesentlich höheren Druck aufweist als das heiße Pyrolysegas in der Verbindungsleitung 54, wird die Sperrwirkung noch erhöht. Zweckmäßig ist in der Verbindungsleitung 54 zwischen der Anschlußstelle 115, der Leitung 112 und der Anschlußstelle 113 der Speiseleitung 94 ein fernbetätigtes Absperrorgan, z. B. Motor- oder Magnetventil, angeordnet. Dieses Absperrorgan ist ebenfalls an das Regelgerät 92 angeschlossen und wird von diesem während des Normalbetriebes offen gehalten, im Störfall dagegen geschlossen. Diese Ausführungsform ist in den Zeichnungen nicht dargestellt.

Im übrigen verläuft der Betrieb der Anlage wie zuvor beschrieben, so daß sich weitere Ausführungen erübrigen. In Figur 2 ist die Einzelheit II der Figur 1 als Ausführungsvariante dargestellt. Der Pyrolysereaktor 120 ist jetzt stehend ausgeführt und arbeitet mit einem Wirbelbett 122, wobei als feinkörniges Wirbelmaterial vorzugsweise Sand verwendet wird. Um das Wirbelmaterial zu verwirbeln und um die Wirbelschicht zu erzeugen, wird im unteren Bereich des Pyrolysereaktors, der sich kegelförmig nach unten verjüngt, durch Wirbelgasleitungen 124 ein Wirbelgas in den Pyrolysereaktor eingeleitet. Als Wirbelgas dient das kalte Pyrolysegas, das der Pyrolysegasleitung 74 entnommen wird. Hierzu sind die Wirbelgasleitungen 124 an die Pyrolysegasleitung 74 angeschlossen.

Zur Beheizung des Wirbelbettes 122 ist im Wirbelbett mindestens ein haarnadelförmiges Heizrohr 126 horizontal angeordnet, das mit Pyrolysegas befeuert wird. Hierzu ist das Heizrohr 126 durch die Rohrleitung 128 mit der Pyrolysegasleitung 74 verbunden.

Während des Betriebes wird dem Pyrolysereaktor zerkleinertes oder kleinstückiges Abfallmaterial, vorzugsweise Gummi- oder Kunststoffabfälle, in Richtung des Pfeiles 130 oben zugeführt. Gleichzeitig wird Wirbelsand und pulverförmiges Zuschlagmaterial zur Schadstoffbindung in den Pyrolysereaktor eingegeben, wie es durch den Pfeil 132 angedeutet ist. Zudem wird Pyrolysegas durch die Wirbelgasleitung 124 in den Pyrolysereaktor eingeführt, so daß das Wirbelbett 122 entsteht. Das Wirbelbett wird durch das befeuerte Heizrohr 126 auf eine Temperatur von 400 bis 1000°C aufgeheizt, das Abgas des Heizrohres wird durch die Leitung 134 abgeführt. Das in das Wirbelbett 122 eingegebene Abfallmaterial wird durch das Wir belbett aufgeheizt und entgast. Das entstandene heiße Pyrolysegas wird durch die Heißgasleitung 34 aus dem Pyrolysereaktor abgezogen und über den Zyklonabscheider 38 der Vorkühlstufe 36 zugeführt. Die Arbeitsweise der dem Pyrolysereaktor 120 nachgeschalteten Anlagenteile verläuft wie im Zusammenhang mit Figur 1 beschrieben, so daß sich hier weitere Ausführungen erübrigen.

Bei der Ausführungsvariante gemäß Figur 2 wird im Störfalle das Wirbelbett 122 und dessen Beheizung durch dem Gasspeicher 80 entnommenes gespeichertes Pyrolysegas aufrechterhalten. Der Betrieb der restlichen Anlagenteile, wird wie weiter oben beschrieben unter Verwendung des gespeicherten Pyrolysegases weitergeführt.

## Ansprüche

1. Verfahren zum Betreiben einer Pryolyseanlage, in der Abfallmaterial, insbesondere Kohlenwasserstoffe enthaltendes Abfallmaterial wie Gummi- und/oder Kunststoffabfälle thermisch zersetzt wird und das entstandene Pyrolysegas in mindestens einer Vorkühlstufe (36) und mindestens einer Nachkühlstufe (56) gekühlt wird und wenigstens ein Teil des gekühlten Pyrolysegases in einem Gasspeicher (80) gespeichert wird, dadurch gekennzeichnet, daß die Temperatur des Pyrolysegases vor dem Eintritt in die Nachkühlstufe (56) (Vorkühltemperatur) gemessen wird, daß, falls die Vorkühltemperatur einen vorgegebenen Grenzwert übersteigt, das Pyrolysegas vor dem Erreichen der Nachkühltstufe (56) aus der Anlage abgeleitet wird, und daß der Nachkühlstufe (56) dem Gasspeicher (80) entnommenes gespeichertes Pyrolysegas zugeführt wird.

2. Verfahren nach Anspruch 1, dadurch gekennzeichnet, daß das aus der Anlage abgeleitete Pyrolysegas durch einen Gasbrenner (108), vorzugsweise durch eine Fackel, verbrannt wird.

3. Verfahren nach Anspruch 1 oder 2, dadurch gekennzeichnet, daß das Pyrolysegas vor der Vorkühlstufe (36) abgeleitet wird, und daß das gespeicherte Pyrolysegas durch die Vorkühlstufe (36) der Nachkühlstufe (56) zugeführt wird.

4. Verfahren nach einem der Ansprüche 1 bis 3, dadurch gekennzeichnet, daß das Pyrolysegas zwischen der Vorkühlstufe (36) und der Nachkühlstufe (56) abgeleitet wird und daß das gespeicherte Pyrolysegas der Nachkühlstufe (56) direkt zugeführt wird.

5. Verfahren nach einem der Ansprüche 1 bis 4, dadurch gekennzeichnet, daß als Grenzwert der Vorkühltemperatur die höchstzulässige Betriebstemperatur der Nachkühlstufe (56) benutzt wird.

## Claims

1. Procedure for operating a pyrolysis plant in which waste material, in particular waste material containing hydrocarbons, such as rubber and/or plastic waste, is thermally decomposed and the pyrolysis gas produced is cooled in at least one preliminary cooling stage (36) and at least one final cooling stage (56) and at least a part of the cooled pyrolysis gas is stored in a gas reservoir (80), characterized in that the temperature of the pyrolysis gas is measured before entering the final cooling stage (56) (preliminary cooling temperature), in that, if the preliminary cooling temperature exceeds a specified limiting value, the pyrolysis gas is removed from the plant before reaching the final cooling stage (56) and in that the stored pyrolysis gas drawn from the gas reservoir (80) is fed to the final cooling stage (56).

2. Procedure according to Claim 1, characterized in that the pyrolysis gas removed from the plant is burnt by a gas burner (108), preferably by a surplus gas burner.

3. Procedure according to Claim 1 or 2, characterized in that the pyrolysis gas is removed upstream of the preliminary cooling stage (36) and in that the stored pyrolysis gas is fed to the final cooling stage (56) through the preliminary cooling stage (36).

4. Procedure according to one of Claims 1 to 3, characterized in that the pyrolysis gas is removed between the preliminary cooling stage (36) and the final cooling stage (56) and in that the stored pyrolysis gas is fed directly to the final cooling stage (56).

5. Procedure according to one of Claims 1 to 4, characterized in that the maximum permissible operating temperature of the final cooling stage (56) is used as the limiting value of the preliminary cooling temperature.

## Revendications

1. Procédé pour faire fonctionner une installation de pyrolyse, dans laquelle des matières de rebut, en particulier des matières de rebut contenant des hydrocarbures, comme des déchets de caoutchouc et/ou de substance synthétique, sont décomposées par voie thermique, le gaz de pyrolyse formé étant refroidi dans au moins un étage de refroidissement préalable (36) et dans au moins un étage de refroidissement ultérieur (56), au moins une partie du gaz de pyrolyse refroidi étant accumulé dans un accumulateur de gaz (80), caractérisé en ce que la température du gaz de pyrolyse est mesurée avant l'entrée dans l'étage de refroidissement ultérieur (36) (température de refroidissement préalable), en ce que, dans le cas où la température de refroidissement préalable dépasse une valeur limite prédéterminée, le gaz de pyrolyse est dévié de l'installation avant d'atteindre l'étage de refroidissement ultérieur (56) et en ce que du gaz de pyrolyse accumulé, prélevé de l'accumulateur de gaz (80), est amené à l'étage de refroidissement ultérieur (56).

2. Procédé suivant la revendication 1, caractérisé en ce que le gaz de pyrolyse dévié de l'installation est brûlé par un brûleur à gaz (108), de préférence par une torche.

3. Procédé suivant l'une des revendications 1 et 2, caractérisé en ce que le gaz de pyrolyse est dévié en amont de l'étage de refroidissement préalable (36) et en ce que le gaz de pyrolyse accumulé est amené à l'étage de refroidissement ultérieur (56) en passant par l'étage de refroidissement préalable (36).

4. Procédé suivant l'une des revendications 1 à 3, caractérisé en ce que le gaz de pyrolyse est dévié entre l'étage de refroidissement préalable (36) et l'étage de refroidissement ultérieur (56) et en ce que le gaz de pyrolyse accumulé est amené directement à l'étage de refroidissement ultérieur (56).

5. Procédé suivant l'une des revendications 1 à 4, caractérisé en ce que la température de fonctionnement la plus haute admissible de l'étage de refroidissement ultérieur (56) est utilisée comme valeur limite de la température de refroidissement préalable.

Fig.1

Fig.2